# EUROPEAN PATENT APPLICATION

(11) **EP 0 684 070 A1**
(43) Date of publication of application: **29.11.1995**
(21) Application number: 95303058.2
(22) Date of filing: 04.05.1995
(51) Int. Cl.: B01J 8/18, B01J 19/02, C01B 33/107

(54) **Fluidized-bed reactor**

(30) Priority: 23.05.1994 US 247434
(71) Applicant: HEMLOCK SEMICONDUCTOR CORPORATION, Hemlock Michigan 48626 (US)
(72) Inventor: Ward, Thomas Michael, Midland, Michigan (US)
(74) Representative: Dowden, Marina

(57) **Abstract**

A fluidized-bed reactor (1) for the reaction of silicon metalloid with a hydrogen halide is described to form halosilanes. It comprises coating the heat exchange elements (8) positioned within the cavity of the reactor (1) with a tungsten carbide coating (11). This coating reduces wear of the heat exchange elements (8) due to silicon particle impingement and/or the corrosive nature of the hydrogen halide. The tungsten carbide coating also reduces contamination of the product halosilanes.

## Description

The present invention is a fluidized-bed reactor for the reaction of silicon metalloid with a hydrogen halide to form halosilanes. It is characterized by the coating of the heat exchange elements positioned within the cavity of the reactor with a tungsten carbide coating. This coating reduces wear of the heat exchange elements due to silicon particle impingement and/or the corrosive nature of the hydrogen halide. The tungsten carbide coating also reduces contamination of the formed halosilanes.

It is known that exothermic gas/solid reactions can be carried out in fluidized-bed reactors. Such reactors have proven to be highly successful, especially in the preparation of halosilanes by the so- called direct process, wherein silicon metalloid is reacted with a hydrogen halide. The heat of reaction is dissipated through the wall of the reactor with the aid of a heat transfer medium. Also, the same medium is typically used to convey the heat required to initiate the reaction.

However, heat dissipation through the reactor wall is not entirely satisfactory and numerous suggestions have been made to improve the process. For example, U.S. Patent 3,133,109 describes the use of a heat transfer coil inserted into the reaction chamber of a fluidized-bed reactor as a temperature control means.

The abrasive nature of the silicon particles when fed under high pressure to fluidized-bed reactors causes significant wear of components of the reactor on which they impinge. Such components can also include heat transfer elements positioned in the reaction chamber.

US Patent 4,176,710 discloses a fluidized-bed reactor having a plurality of heat transfer elements suspended into the reaction chamber, where the heat transfer elements are designed to reduce abrasive wear. Specifically, the ends of the heat transfer elements are conically shaped to offer reduced resistance to gas and particle flow.

DE 3640172 shows the use of an alloy comprising at least 40 weight percent nickel and 0.5 to 4 weight percent titanium within fluidized-bed reactors to reduce wear.

We have surprisingly found that tungsten carbide can be used to coat heat exchange elements positioned in the reaction chamber of fluidized-bed reactors. The tungsten carbide coating is applied to standard materials of construction of these heat exchange elements. Furthermore, our tungsten carbide coating need only be placed on those portions of the heat exchange element where wear is a significant issue. An additional advantage to using tungsten carbide as an abrasive resistant coating on the heat exchange element is that our tungsten carbide coatings do not provide significant contamination to the halosilanes formed. This is a critical requirement when the halosilanes are to be used, for example, in the manufacture of semiconductor grade silicon.

Our invention provides a fluidized-bed reactor for reacting silicon metalloid (hereinafter silicon) with a hydrogen halide to produce halosilanes. This reactor comprises a reaction chamber for the preparation of halosilanes by the reaction of silicon with a hydrogen halide. The fluidized-bed reactor further comprises at least one heat exchange element for conveying a heat transfer medium; said heat exchange element is positioned within the reaction chamber. Our invention is characterized in that a coating of tungsten carbide is formed on at least a portion of the heat exchange element.

This characterizing feature is useful in any fluidized-bed reactor for reacting silicon with a hydrogen halide, wherein the reactor has positioned within the reaction chamber a heat exchange element.

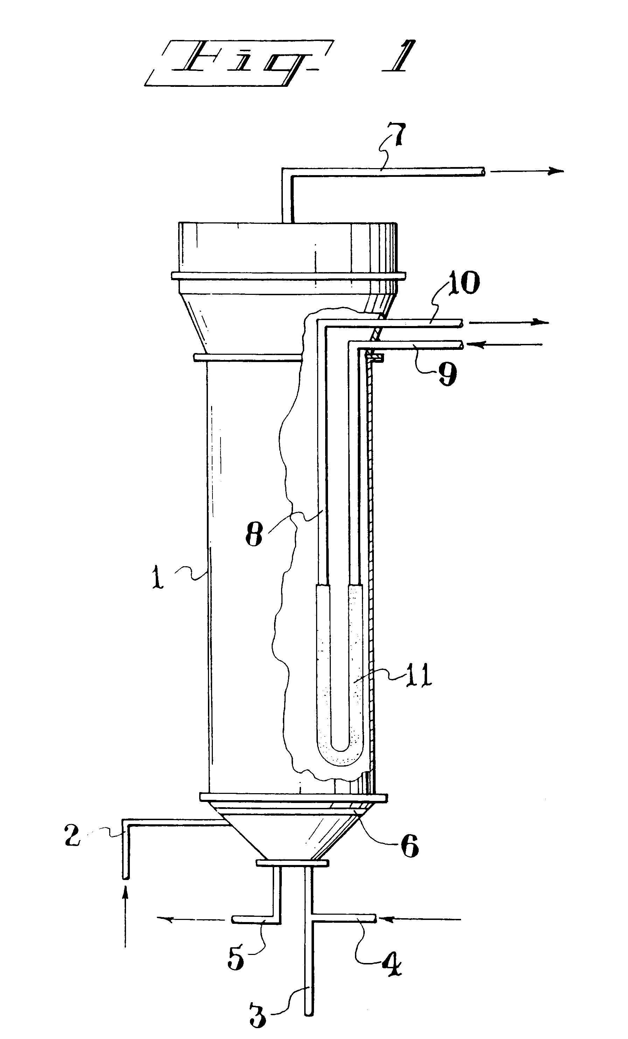

A representative example of the type of fluidized-bed reactor which can be utilized by the present invention is described in US Patent 4,176,710. Figure 1 is a schematic representation of a fluidized-bed reactor incorporating the present invention. To further illustrate our invention, reference is made to Figure 1. In Figure 1, the fluidized-bed reactor comprises shell 1, having halogen halide inlet 2, particulate silicon inlet 3, nitrogen gas inlet 4 and spent-bed outlet 5. Inlets 2-4 and outlet 5 are separated from the reaction chamber of the reactor by distributor plate 6. Products, by-products and unreacted gases are removed from this reactor through product outlet 7. Positioned within shell 1 is heat exchange element 8. Connected to heat exchange element 8 is heat exchange fluid inlet 9 and heat exchange fluid outlet 10. The lower section of heat exchange element 8 has applied to it a tungsten carbide coating 11.

Fluidized-bed reactor shell 1 can be of made of standard materials for fabricating reactors suitable for contacting particulate silicon with a halogen halide. The reactor can be fabricated, for example, from carbon steel or stainless steel.

The particulate silicon can be an essentially pure silicon such as metallurgical grade silicon or it can be silicon alloyed with another metal such as copper, phosphorous, iron and the like. The hydrogen halide can be hydrogen bromide, hydrogen chloride, hydrogen fluoride or hydrogen iodide. Preferred is when the fluidized-bed reactor is used to react metallurgical grade silicon with hydrogen chloride. By "metallurgical grade" silicon, it is meant a composition comprising at least 95 weight percent silicon and less than 100 weight percent silicon.

Positioned within fluidized-bed reactor shell 1 is one or more heat exchange elements 8 having a tungsten carbide coating 11 on at least a portion of the external surface of the heat exchange element which contacts the particulate silicon and hydrogen halide. The design, number and position of the heat exchange elements are not critical to the functioning of the present invention. Such design, number and position will depend on the diameter of the fluidized-bed reactor and the cooling surface required its contents. By way of example, US Patent 4,176,710 and present Figure 1 illustrate useful but not essential designs of heat exchange elements. In Figure 1, heat exchange element 8 is in the form of a "U" shaped tube. The reactor can contain one or more such "U" shaped tubes as heat exchange elements. These elements can be formed from standard materials suitable for use in fluidized-bed reactors for contacting particulate silicon with a halogen halide. For example, carbon steel or stainless steel can be utilized.

At least a portion of heat exchange element 8 is coated with tungsten carbide coating 11. The method of coating heat exchange element 8 with tungsten carbide is not critical and can be, for example, a plasma spraying process as described in Kirk-Othmer, Encyclopedia of Chemical Technology, 3rd Ed., Vol. 15, p. 255. The thickness of tungsten carbide coating 11 is limited by the process for its application and obvious heat transfer considerations of the particular reactor configuration. In general, it is preferred from a cost and heat-transfer perspective that the thickness of the tungsten carbide coating 11 be the minimum necessary to protect heat exchange element 8. All or a portion of heat exchange element 8 may be coated with a tungsten carbide coating 11. From a cost and heat-transfer perspective it may be desirable in some reactor configurations to coat only the portion of the heat exchange element which has the greatest erosion due to particulate silicon impingement.

The following example is provided to illustrate the advantages afforded by the present improvement to fluidized-bed reactors and not to limit the scope of the claims herein.

### Example

A standard commercial fluidized-bed reactor for reacting hydrogen chloride with metallurgical- grade particulate silicon was used. Positioned within the reactor was a plurality of "U"-shaped heat exchange elements formed from carbon steel. The heat exchange elements were similar in design to those shown in Figure 1. The lower third of one of the heat exchange elements was coated with a 0.5 to 0.6 mm thick coat of tungsten carbide by a plasma-spraying process. For comparison, the lower third of a similarly positioned heat exchange element was coated with a 0.5 to 0.6 mm thick coating of stainless steel by a wire-arc technique.

The reactor containing the coated heat exchange elements was run in commercial production for a period of 17 months. At the end of 17 months, the coated heat exchange elements were removed from the reactor along with a similarly positioned non-coated heat exchange element. The wall thickness of each heat exchange element was determined at a position midpoint along the length of the coated portion of the heat exchange element. In the case of the uncoated element, wall thickness was measured at a similar distance from the end of the element. There was a 52 percent decrease in wall thickness of the uncoated heat exchange element, a 38 percent decrease in wall thickness of the stainless steel coated element and no change (decrease) in the wall thickness of the heat exchange element coated with tungsten carbide.

## Claims

1. A fluidized-bed reactor comprising a reaction chamber for the preparation of halosilanes from the reaction of silicon metalloid with a hydrogen halide and at least one heat exchange element for conveying a heat transfer medium, the heat exchange element being positioned in the reaction chamber of the fluidized-bed reactor and characterized in that a coating of at least a portion of the external surface of the heat exchange element is formed thereon with tungsten carbide.

2. A fluidized-bed reactor according to claim 1 wherein the reactor is used to react metallurgical grade silicon with hydrogen chloride to make chlorosilanes for use in the manufacture of semiconductor grade silicon.

3. A method for improving the durability of one or more heat exchange elements used to effect heat transfer in fluidized-bed reactors for the reaction of particulate silicon with hydrogen chloride, characterized in that a coating of at least a portion of the external surface of the heat exchange element is formed thereon with tungsten carbide.
